# EUROPEAN PATENT SPECIFICATION

(11) **EP 0 716 007 B1**
(45) Date of publication and mention of the grant of the patent: **17.03.1999**
(21) Application number: 95119314.3
(22) Date of filing: 07.12.1995
(51) Int. Cl.: B62H 5/18, B62H 5/20

(54) **Antitheft device for a vehicle**
Diebstahlsicherung für Fahrzeug
Dispositif antivol pour véhicule

(30) Priority: 07.12.1994 JP 330634/94
(43) Date of publication of application: 12.06.1996
(73) Proprietor: Kabushiki Kaisha IIC, Iwata-shi, Shizuoka-ken (JP)
(72) Inventor: Ishii, Yasushi, Iwata-shi, Shizuoka-ken (JP); Okada, Mitsuhiro, Iwatashi, Shizuoka-ken (JP)
(74) Representative: Grünecker, Kinkeldey, Stockmair & Schwanhäusser Anwaltssozietät

(56) References cited:
- WO-A-89/02380
- DE-U- 8 909 539
- DE-U- 9 319 458
- DE-U- 9 419 272
- US-A- 4 833 442

## Description

This invention relates to a lock arrangement fastenable to a brake disk of a vehicle, for instance a motorcycle, comprising a lock device portion having a groove for receiving said brake disk and a lock device for locking or unlocking, respectively, said lock device portion with said brake disk. Such a lock arrangement is known from DE-U-9319458.

Some common lock arrangements useful for preventing such above mentioned vehicle from being stolen are wires, chains, U-shaped metallic bars in order to tie the vehicle body to a fence or telephone pole or to lock the wheel rotation. However, that such arrangements tend to be heavy and bulky so that the handling is cumbersome.

In order to solve this problem an antitheft device of a compact structure, a so-called disk lock, has been developed and is already on the market. That device includes a lock device attached to the disk portion of the disk brake which is generally in wide use in motorcycles, and prevents the rotation of the wheel as the device is blocked by vehicle body parts such as the front fork or brake caliper.

While the above device has many advantages as it is compact, light-weight, and easy to handle, on the other hand it is less noticeable because of its small size. As a result, there is a problem that even the owner of the vehicle sometimes forgets that the wheel has been locked with that device, attempts to start without unlocking, and does damages to the vehicle parts.

Accordingly, it is an objective of the present invention to provide an improved lock arrangement for vehicles as indicated above, which is capable to indicate its locked state.

According to the invention this objective is solved for a lock arrangement as indicated above by a device for detecting vehicle movement and for outputting a signal indicating said movement.

According to an advantageous embodiment of the invention said device is an alarm device comprising a movement sensor and said signal is an alarm sound and/or alarm light.

In order to be able to carry said lock arrangement in an inactivated state, it is advantageous that said alarm device comprises a switch for activating or deactivating same whereby said switch either is manually operated or switchable by said lock device.

In order to prevent the theft of said device and/or in order to prevent the deactivation of said device by an unauthorised person it is preferred to arrange said device on said side of the lock arrangement facing to the rim or spokes, respectively, of the wheel of said vehicle.

Other preferred embodiments of the present invention are laid down in the further dependent claims.

With the constitution described above, when the rider brings the vehicle body from the attitude resting on the side stand to upright attitude, or the rider moves the vehicle forward from the position resting on the center stand, or the the rider steers the handlebars, the warning device, upon detecting the vehicle body movement, issues an alarm to alert the rider to unlock the lock device without fail before starting the vehicle.

In the following, the present invention is explained in greater detail with respect to several embodiments thereof in conjunction with accompanying drawings, wherein:
FIG. 1 is a side view of an essential portion of a motorcycle employing the antitheft device of this invention.
FIG. 2 is a side view of an antitheft device as an embodiment of this invention.
FIG. 3 is an oblique view of a lock device portion only (conventional disk lock) for use in the embodiment shown in FIG. 2.
FIG. 4 is a side view of the lock device shown in FIG. 3 in the state of being attached and locked to the disk brake.
FIG. 5 is a top view showing part of the alarm device as an embodiment shown in FIG. 2
FIG. 6 shows a cross sections A-A, B-B, C-C, and D-D of the alarm device shown in FIG. 5 as FIGs. 6(A), 6(B), 6(C), and 6(D), respectively.

The antitheft device for motorcycles of this invention will be hereinafter describe in reference to the appended drawings.

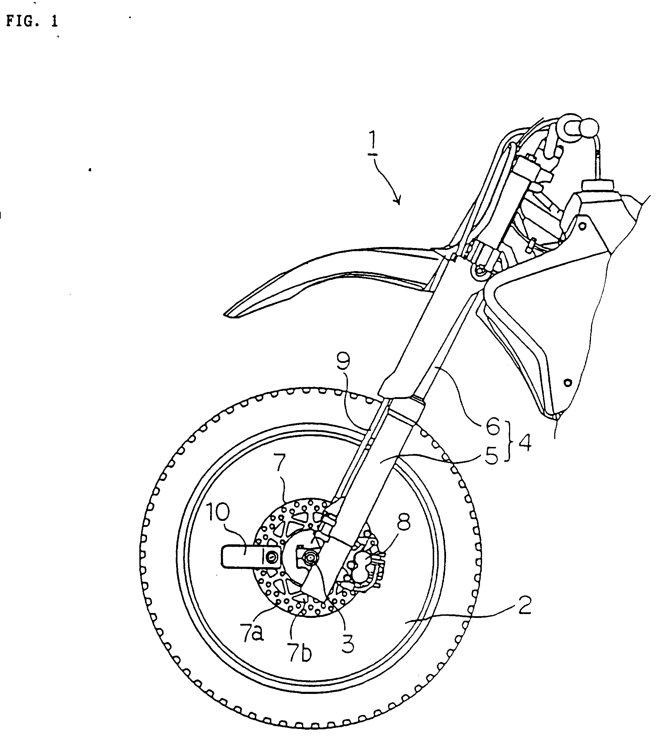

FIG. 1 is a view around the front wheel of a motorcycle (1) locked with the antitheft device of this invention. The motorcycle (1) has a front fork (4) consisting of an outer tube or bottom case (5) fixed with an offset to a wheel shaft (3) for a front wheel (2), and an inner tube (6) inserted for free sliding within the outer tube (5). The front wheel (2) freely rotates about the wheel shaft (3) fixed to the outer tube (5) of the front fork (4).

A brake disk (7) for the front brake is attached direct to a side of a hub portion of the wheel (2) (on one side of the wheel for a single disk brake, on both sides of the wheel for a double disk brake). A brake caliper (8) for squeezing the outside portions of the brake disk (7) is attached to the lower back side of the outer tube (5). A brake hose (9) connected to the caliper (8) is routed along the front side of the front fork (4). (In FIG. 1, spokes for connecting the hub portion of the front wheel (2) to the rim portion are omitted.)

For efficient heat radiation, the brake disk (7) is provided with many holes (7a) in a radially outer portion providing brake surfaces in contact with pads of the caliper (8), and with many holes (7b) which are larger in size than the holes (7a) in a radially inner portion which is a connecting portion to the hub portion of the front wheel (2).

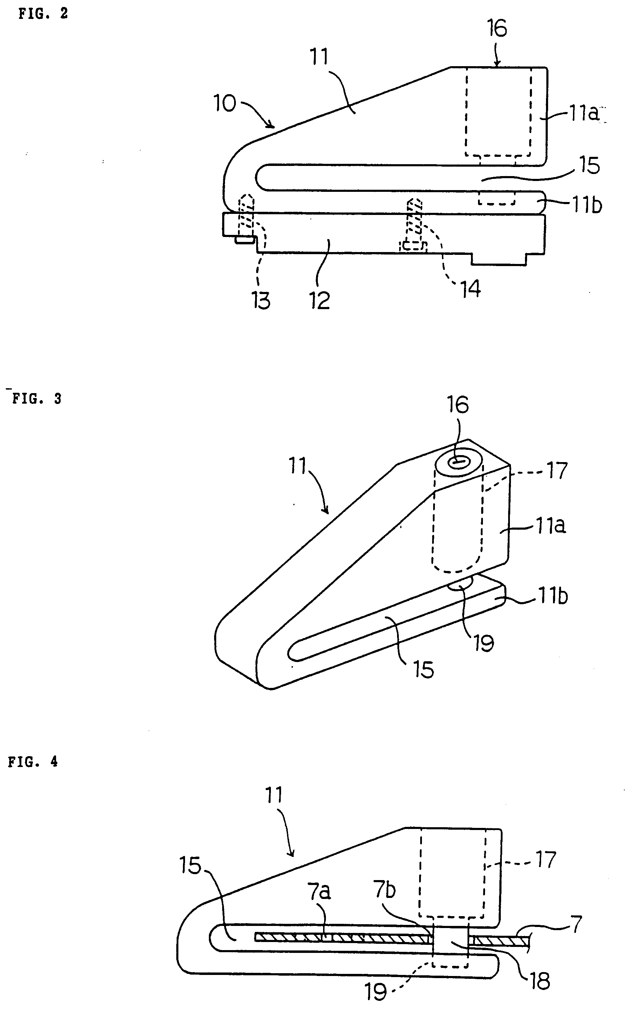

A lock arrangement or antitheft device (10) is to be attached to and removed from the brake disk (7) directly connected to the wheel (2) of the motorcycle (1) and comprises, as shown in Fig. 2, a lock device portion (11) for attachment to and removal from the brake disk (7), and an alarm device portion (12) for sounding an alarm by detecting the vehicle body movement.

The lock device portion (11) of the antitheft device (10) is of a conventional structure known as the disk lock. As shown in FIG. 3, the lock device portion (11) is formed with a groove (15) for receiving a portion of the brake disk (7). One side portion (11a) of the lock device portion (11) opposite the other portion (11b) beyond the groove (15) holds a lock cylinder (17) having a key insertion hole (16). The other side (11b) is provided with an engagement recess (19) for a lock pin (18) in the lock cylinder (17) to slide in or out.

The lock device (11) is arranged as shown in FIG. 4 so that a lock pin (18) in the lock cylinder (17) slides in and out by the operation of a key inserted into the key insertion hole (16). For locking, part of the brake disk (7) is inserted into the groove (15), the lock device (11) is positioned so that the lock pin (18) can enter one of the holes (7b), and the lock pin (18) is made to project by the key operation so that the lock device (11) is locked to be incapable of moving relative to the brake disk (7).

When the lock device (11) is locked to the brake disk (7) as described above, the wheel (2) cannot rotate even if an attempt is made to move the vehicle because the lock device (11) cannot move as it is blocked by the outer tube (5) and the caliper (8).

The antitheft device (10) is further provided with the alarm device (12) added to the lock device (11) described above as shown in FIG. 2. The alarm device (12) is detachably attached to the side (11b) using screws (13, 14) opposite the side (11a) having the key insertion hole (16) with the groove (15) interposed in between.

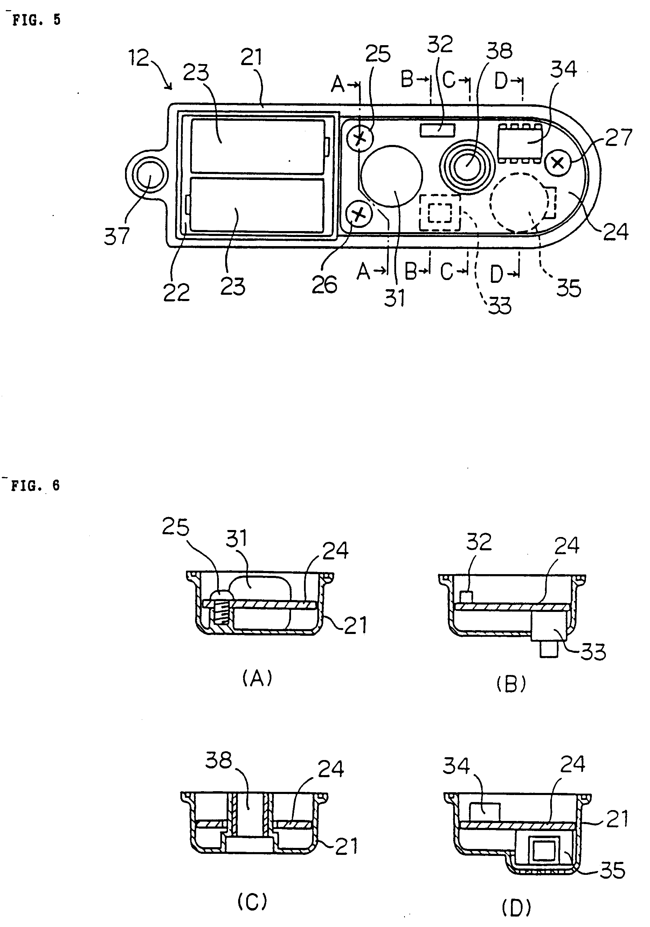

FIG. 5 shows the inside of the alarm device (12) in a state of being removed from the lock device (11). Batteries (23) for supplying power are housed in a battery compartment (22) within a case (21) of the alarm device (12). A component layout panel (24) to which various components are mounted in advance is installed in the case (21) and secured with screws (25, 26, 27).

On the component layout panel (24) are disposed a sensor (31) for detecting vibration and position changes as shown in FIG. 6(A), a switch (33) for turning a capacitor (32) and the power source on and off as shown in FIG. 6(B), and an IC (34) and a speaker (35) for sounding the alarm as shown in FIG. 6 (D).

The case (21) for receiving the component layout panel (24) on which the batteries (23) for providing power and various components are mounted is detachably attached to the lock device (11) using two screws (13, 14) as shown in FIG. 2 which go through screw passage portion (37) formed at the end of the case (21) and a screw passage portion (38) formed through the case (21) as shown in FIG. 6(C) so that the case (21) is covered and closed with the lock device (11).

When the antitheft device (10) of this invention comprising the lock device (11) and the alarm device (12) as described above is not in use and to be carried, the switch (33) of the alarm device (12) is turned off. When the antitheft device (10) is in use as attached and locked to the brake disk (7) as shown in FIG. 1 with the key insertion hole (16) directed outward and the lock pin (18) through the hole (7b), the switch (33) of the alarm device (12) is turned on.

With the antitheft device (10) for motorcycles of this invention, if the rider forgets to unlock the antitheft device (10) and brings the vehicle body, for example, to upright attitude in an attempt to start, the sensor (31) built in the alarm device (12) detects the movement of the vehicle body and an alarm is sounded from the speaker (35) as triggered by the detection signal, and the rider is alerted to the fact that he or she has forgot to unlock before starting the vehicle.

Since the alarm device (12) is detachably attached to the lock device (11) using screws (13, 14), the antitheft device (10) can be easily fabricated using a conventional disk lock, and since the alarm device (12) is covered and closed by the lock device (11), battery change and component maintenance of the alarm device (12) are easily made by simply loosening the screws (13, 14) and removing the alarm device (12) from the lock device (11).

In the state of the alarm device (12) attached and locked to the brake disk (7) with the key insertion hole (16) directed outward, since the alarm device (12) is hidden behind the lock device (11), the alarm device (12) portion is prevented from being stolen or tampered while in use.

While the motorcycle shown in FIG. 1 is of an off-road type having the brake disk (7) of the front brake on one side of the wheel (2), if the antitheft device (10) of this invention is used on a motorcycle of an on-road type having two disks for the front brake, the alarm device (12) is located between the two disks, making the prevention of theft or tamper of the alarm device (12) all the more effective.

While the antitheft device for motorcycles of this invention is described above by way of an embodiment, this invention is not limited to such an embodiment alone but it goes without saying that the specific structures of the lock device and the alarm device may be suitably modified in design: when the lock device and the alarm device are made integrally, it may be arranged for example that the operation of the lock device by the key is interlocked with the switch of the alarm device without employing the manual switch (33) described in the above embodiment so that a switch of the alarm device is turned on when the lock device is locked and the switch of the alarm device is turned off when the lock device is unlocked.

According to the antitheft device of this invention described above, damages on the vehicle parts due to forgotten unlocking and removal of the lock device are prevented although the device is small and less noticeable, while providing advantages of compactness, light weight, and ease of handling.

## Claims

1. Lock arrangement (10) fastenable to a brake disk (7) of a vehicle, for instance a motorcycle (1), comprising a lock device portion (11) having a groove (15) for receiving said brake disk (7) and a lock device (17) locking or unlocking, respectively, said lock device portion (11) with said brake disk (7), **characterised by** a device (12) detecting vehicle movement and outputting a signal indicating said movement.

2. Lock arrangement (10) according to claim 1, **characterised in that** said device is an alarm device (12) comprising a movement sensor (31) and that said signal is an alarm sound and/or alarm light.

3. Lock arrangement (10) according to claim 2, **characterised in that** said alarm device (12) comprising a switch (33) for activating or deactivating said device (12).

4. Lock arrangement (10) according to claim 3, **characterised in that** said switch (33) is manually operated or switchable by said lock device (17).

5. Lock arrangement (10) according to at least one of the preceding claims 2 to 4, **characterised in that** said device (12) comprising a layout panel (24) for supporting said sensor (31), a speaker (35), a capacitor (32) and an IC (34).

6. Lock arrangement (10) according to claim 5, **characterised in that** said panel (24) is fastened with bolts (25,26,27) to a case (21) of said device (12).

7. Lock arrangement (10) according to at least one of the preceding claims 1 to 6, **characterised in that** said device (12) is powered by at least one battery (23) arranged within a battery compartment (22).

8. Lock arrangement (10) according to at least one of the preceding claims 1 to 7, **characterised in that** said device (12) is removably fastened to said lock device portion (11).

9. Lock arrangement (10) according to at least one of the preceding claims 1 to 7, **characterised in that** said device (12) is integrally formed with said lock device portion (11).

10. Lock arrangement (10) according to at least one of the preceding claims 1 to 9, **characterised in that** said lock device comprises a lock cylinder (17) having a moveable lock pin (18) being engagable with an engagement recess (19) and a keyhole (16) for inserting a key to activate or deactivate, respectively, said lock device.

11. Lock arrangement (10) according to at least one of the preceding claims 1 to 10, **characterised in that** said device (12) is arranged on that side of the lock arrangement (10) facing the rim or spokes, respectively, of a wheel (2).

## Patentansprüche

1. Verriegelungsanordnung (10), die an einer Bremsscheibe (7) eines Fahrzeugs, beispielsweise eines Motorrades (1), angebracht werden kann, und die einen Verriegelungsvorrichtungsabschnitt (11) mit einer Einkerbung (15) zur Aufnahme der Bremsscheibe (7) und eine Verriegelungsvorrichtung (17) zum Verriegeln bzw. Entriegeln des Verriegelungsvorrichtungsabschnitts (11) an der Bremsscheibe (7) umfaßt, **gekennzeichnet durch** eine Vorrichtung (12), die Fahrzeugbewegung erfaßt und ein Signal ausgibt, das die Bewegung anzeigt.

2. Verriegelungsanordnung (10) nach Anspruch 1, **dadurch gekennzeichnet,** daß es sich bei der Vorrichtung um eine Alarmvorrichtung (12) handelt, die einen Bewegungssensor (31) umfaßt, und daß es sich bei dem Signal um einen Alarmton und/oder ein Alarmlichtsignal handelt.

3. Verriegelungsanordnung (10) nach Anspruch 2, **dadurch gekennzeichnet,** daß die Alarmvorrichtung (12) einen Schalter (33) umfaßt, mit dem die Vorrichtung (12) aktiviert oder deaktiviert wird.

4. Verriegelungsanordnung (10) nach Anspruch 3, **dadurch gekennzeichnet,** daß der Schalter (33) manuell betätigt wird, oder durch die verriegelungsvorrichtung (17) geschaltet werden kann.

5. Verriegelungsanordnung (10) nach wenigstens einem der vorangehenden Ansprüche 2 bis 4, **dadurch gekennzeichnet,** daß die Vorrichtung (12) eine Anordnungsplatte (24) umfaßt, die den Sensor (31), einen Lautsprecher (35), einen Kondensator (32) und einen integrierten Schaltkreis (34) aufnimmt.

6. Verriegelungsanordnung (10) nach Anspruch 5, **dadurch gekennzeichnet,** daß die Platte (24) mit Schrauben (25, 26, 27) an einem Gehäuse (21) der Vorrichtung (12) befestigt ist.

7. Verriegelungsanordnung (10) nach wenigstens einem der Ansprüche 1 bis 6, **dadurch gekennzeichnet,** daß die Vorrichtung (12) von wenigstens einer Batterie (23) gespeist wird, die in einem Batteriefach (22) angeordnet ist.

8. Verriegelungsanordnung (10) nach wenigstens einem der vorangehenden Ansprüche 1 bis 7, **dadurch gekennzeichnet,** daß die Vorrichtung (12) lösbar an dem Verriegelungsvorrichtungsabschnitt (11) befestigt ist.

9. Verriegelungsanordnung (10) nach wenigstens einem der vorangehenden Ansprüche 1 bis 7, **dadurch gekennzeichnet,** daß die Vorrichtung (12) integral mit dem Verriegelungsvorrichtungsabschnitt (11) ausgebildet ist.

10. Verriegelungsanordnung (10) nach wenigstens einem der vorangehenden Ansprüche 1 bis 9, **dadurch gekennzeichnet,** daß die Verriegelungsvorrichtung einen schließzylinder (17) mit einem beweglichen Schließbolzen (18) umfaßt, der mit einer Eingriffsaussparung (19) in Eingriff gebracht werden kann, sowie ein Schlüsselloch (16) zum Einführen eines Schlüssels, mit dem die Verriegelungsvorrichtung aktiviert bzw. entaktiviert wird.

11. Verriegelungsvorrichtung (10) nach wenigstens einem der vorangehenden Ansprüche 1 bis 10, **dadurch gekennzeichnet,** daß die Vorrichtung (12) auf der Seite der Verriegelungsanordnung (10) angeordnet ist, die der Felge bzw. den Speichen eines Rades (2) zugewandt ist.

## Revendications

1. Dispositif de verrouillage (10) pouvant être fixé à un disque de frein (7) d'un véhicule, par exemple une motocyclette (1), comprenant une partie de dispositif de verrouillage (11) ayant une gorge (15) destinée à loger ledit disque de frein (7) et un dispositif de verrouillage (17) assurant un verrouillage ou un déverrouillage, respectivement, de la dite partie de dispositif de verrouillage (11) avec ledit disque de frein (7), caractérisé par un dispositif (12) détectant le mouvement du véhicule et émettant un signal indiquant ledit mouvement.

2. Dispositif de verrouillage (10) selon la revendication (1), caractérisé en ce que ledit dispositif est un dispositif d'alarme (12) comprenant un capteur de mouvement (31), et en ce que ledit signal est une alarme sonore et/ ou une alarme lumineuse.

3. Dispositif de verrouillage (10) selon la revendication 2, caractérisé en ce que ledit dispositif d'alarme (12) comprend un commutateur (33) servant à activer ou à désactiver ledit dispositif (12).

4. Dispositif de verrouillage (10) selon la revendication 3, caractérisé en ce que ledit commutateur (33) est actionné manuellement ou peut-être commuté par ledit dispositif de verrouillage (17).

5. Dispositif de verrouillage (10) selon au moins l'une des revendications 2 à 4 précédentes, caractérisé en ce que ledit dispositif (12) comprend un panneau structurel (24) servant à supporter ledit capteur (31), un haut-parleur (35), un condensateur (32) et un circuit intégré IC (34).

6. Dispositif de verrouillage (10) selon la revendication 5, caractérisé en ce que ledit panneau (24) est fixé par des boulons (25, 26, 27) à un carter (21) du dit dispositif (12).

7. Dispositif de verrouillage (10) selon au moins l'une des revendications 1 à 6 précédentes, caractérisé en ce que ledit dispositif (12) est alimenté par au moins une batterie (23) agencée dans un compartiment de batterie (22).

8. Dispositif de verrouillage (10) selon au moins l'une des revendications 1 à 7 précédentes, caractérisé en ce que ledit dispositif (12) est fixé de manière amovible à ladite partie de dispositif de verrouillage (11).

9. Dispositif de verrouillage (10) selon au moins l'une des revendications 1 à 7 précédentes, caractérisé en ce que ledit dispositif (12) est pourvu d'un seul tenant de ladite partie de dispositif de verrouillage (11).

10. Dispositif de verrouillage (10) selon au moins l'une des revendications 1 à 9 précédentes, caractérisé en ce que ledit dispositif de verrouillage comprend un cylindre de verrouillage (17) ayant une tige de verrouillage (18) déplaçable, susceptible de s'engager dans une cavité d'engagement (19) et un trou de serrure (16), destiné à insérer une clé pour activer ou désactiver, respectivement, ledit dispositif de verrouillage.

11. Dispositif de verrouillage (10) selon au moins l'une des revendications 1 à 10 précédentes, caractérisé en ce que ledit dispositif (12) est agencé sur le côté du dispositif de verrouillage (10) qui est tourné vers la jante ou les rayons, respectivement, d'une roue (2).
